# EUROPEAN PATENT APPLICATION

(11) **EP 3 461 174 A1**
(43) Date of publication of application: **27.03.2019**
(21) Application number: 16919442.0
(22) Date of filing: 20.10.2016
(51) Int. Cl.: H04W 28/26

(54) **METHOD FOR TRANSMITTING UPLINK DATA, NETWORK SIDE DEVICE AND TERMINAL DEVICE**

(71) Applicant: GUANGDONG OPPO MOBILE TELECOMMUNICATIONS CORP., LTD., Dongguan, Guangdong 523860 (CN)
(72) Inventor: LIN, Yanan, Dongguan Guangdong 523860 (CN); XU, Hua, Ottawa, Ontario K2M 1N6 (CA)
(74) Representative: Manitz Finsterwald Patent- und Rechtsanwaltspartnerschaft mbB
(86) International application number: PCT/CN2016/102733
(87) International publication number: WO 2018/072180

(57) **Abstract**

Provided by the embodiments of the present invention are a method for transmitting uplink data, a network side device and a terminal device. The method comprises: a network side device receiving uplink data sent by a terminal device; and the network side device, when receiving the uplink data correctly, sending a first sequence to the terminal device in a first time-frequency resource, the first sequence being used to indicate that the network side device has correctly received the uplink data. The embodiments of the present invention may ensure normal transmission of data between the terminal device and the network side device.

## Description

### TECHNICAL FIELD

The disclosure relates to the technical field of wireless communication, and more particularly, to a method for uplink data transmission, a network device and a terminal device.

### BACKGROUND

In a Long Term Evolution (LTE) system, a terminal device may transmit uplink data to a network device only after receiving scheduling information of the network device. Such an uplink data transmission manner is relatively high in control signaling overhead and relatively long in end-to-end delay. For better uplink data transmission, there is a need for a better method for uplink data transmission.

### SUMMARY

The disclosure provides a method for uplink data transmission, a network device and a terminal device, to enable the terminal device to determine whether the network device receives uplink data or not.

A first aspect provides an method for uplink data transmission, which may include that, a network device receives uplink data transmitted by a terminal device; and in case that the uplink data is correctly received, the network device transmits a first sequence to the terminal device on a first time-frequency resource, the first sequence being configured to indicate that the network device correctly receives the uplink data.

In case that the uplink data is correctly received, the network device may transmit the first sequence to the terminal device and then the terminal device may detect the first sequence to determine whether the network device receives the uplink data or not, so that normal data transmission between the terminal device and the network device may be ensured.

Herein, in the case that the uplink data is correctly received, it means that the network device receives and correctly decodes the uplink data transmitted by the terminal device.

In combination with the first aspect, in some implementation modes of the first aspect, the method may further include that, the network device determines a time-domain location and/or frequency-domain location occupied by the first time-frequency resource according to a dedicated parameter of the terminal device.

The dedicated parameter may be a device Identifier (ID) of the terminal device and the network device may flexibly determine the time-domain location and/or the frequency-domain location occupied by the first time-frequency resource according to the dedicated parameter for reasonable utilization of time-frequency resources.

In combination with the first aspect, in some implementation modes of the first aspect, the method may further include that, the network device transmits first indication information to the terminal device, the first indication information being configured to indicate the time-domain location and/or the frequency-domain location occupied by the first time-frequency resource.

The time-domain location and/or frequency-domain location occupied by the first time-frequency resource are/is indicated through the first indication information, so that the terminal device may receive the first sequence at the time-domain location and/or the frequency-domain location occupied by the first time-frequency resource.

In combination with the first aspect, in some implementation modes of the first aspect, the method may further include that, the network device determines a length of the first sequence; and the network device transmits second indication information to the terminal device, the second indication information being configured to indicate the length of the first sequence.

The second indication information is transmitted to the terminal device, so that the terminal device may detect the first sequence on the first time-frequency resource according to the length of the first sequence.

In combination with the first aspect, in some implementation modes of the first aspect, the method may further include that, the network device generates the first sequence according to the dedicated parameter of the terminal device.

In combination with the first aspect, in some implementation modes of the first aspect, the network device may receive the uplink data on a second time-frequency resource, the second time-frequency resource may occupy a time unit N and the first time-frequency resource may occupy a time unit N+K, both of N and K being nonnegative integers.

In combination with the first aspect, in some implementation modes of the first aspect, the first time-frequency resource may include all available Resource Elements (REs) on at least one Physical Resource Block (PRB).

In combination with the first aspect, in some implementation modes of the first aspect, the first time-frequency resource may include all available REs on some of time symbols of the at least one PRB.

In combination with the first aspect, in some implementation modes of the first aspect, the first time-frequency resource may include available REs on at least one time symbol.

In combination with the first aspect, in some implementation modes of the first aspect, the first sequence may be an orthogonal sequence or a Zadoff Chu (ZC) sequence.

In combination with the first aspect, in some implementation modes of the first aspect, the method may further include that, in case that the uplink data is not correctly received, the network device transmits a second sequence to the terminal device on the first time-frequency resource, the second sequence being configured to indicate that the network device does not correctly receive the uplink data.

In the case that the uplink data is not correctly received, it means that the network device receives but fails to decode the uplink data transmitted by the terminal device.

In combination with the first aspect, in some implementation modes of the first aspect, the method may be applied to uplink data transmission without grant.

When an uplink data transmission without grant manner is adopted, a delay may be reduced and power consumption of the terminal device may be reduced.

A second aspect provides a method for uplink data transmission, which may include that, a terminal device transmits uplink data to a network device; and the terminal device detects a first sequence transmitted by the network device on a first time-frequency resource, the first sequence being configured to indicate that the network device correctly receives the uplink data.

In case that the uplink data is correctly received, the network device may transmit the first sequence to the terminal device and then the terminal device may detect the first sequence to determine whether the network device receives the uplink data or not, so that normal data transmission between the terminal device and the network device may be ensured.

In combination with the second aspect, in some implementation modes of the second aspect, the terminal device may determine a time-domain location and/or a frequency-domain location occupied by the first time-frequency resource according to a dedicated parameter of the terminal device.

In combination with the second aspect, in some implementation modes of the second aspect, the method may further include that, the terminal device receives first indication information transmitted by the network device, the first indication information being configured to indicate the time-domain location and/or the frequency-domain location occupied by the first time-frequency resource; and the terminal device determines the first time-frequency resource according to the first indication information.

In combination with the second aspect, in some implementation modes of the second aspect, the method may further include that, the terminal device receives second indication information transmitted by the network device, the second indication information being configured to indicate a length of the first sequence; and the terminal device determines the length of the first sequence according to the second indication information.

In combination with the second aspect, in some implementation modes of the second aspect, the method may further include that, the terminal device determines the first sequence according to the dedicated parameter of the terminal device.

In combination with the second aspect, in some implementation modes of the second aspect, the terminal device may transmit the uplink data on a second time-frequency resource, the second time-frequency resource may occupy a time unit N and the first time-frequency resource may occupy a time unit N+K, both of N and K being nonnegative integers.

In combination with the second aspect, in some implementation modes of the second aspect, the first time-frequency resource may include all available REs on at least one PRB.

In combination with the second aspect, in some implementation modes of the second aspect, the first time-frequency resource may include all available REs on some of time symbols of the at least one PRB.

In combination with the second aspect, in some implementation modes of the second aspect, the first time-frequency resource may include available REs on at least one time symbol.

In combination with the second aspect, in some implementation modes of the second aspect, the first sequence may be an orthogonal sequence or a ZC sequence.

In combination with the second aspect, in some implementation modes of the second aspect, the method may further include that, the terminal device detects a second sequence transmitted by the network device on the first time-frequency resource, the second sequence being configured to indicate that the network device does not correctly receive the uplink data.

In combination with the second aspect, in some implementation modes of the second aspect, the method may be applied to uplink data transmission without grant.

A third aspect provides a network device, which includes modules configured to execute the method in the first aspect.

A third aspect provides a terminal device, which includes modules configured to execute the method in the second aspect.

A fifth aspect provides a network device, which includes a memory, a transceiver and a processor. The memory is configured to store a program, the processor is configured to execute the program and, when the program is executed, the processor is configured to call the transceiver to execute the method in the first aspect.

A sixth aspect provides a terminal module, which includes a memory, a transceiver and a processor. The memory is configured to store a program, the processor is configured to execute the program and, when the program is executed, the processor is configured to call the transceiver to execute the method in the second aspect.

A seventh aspect provides a computer-readable medium, which stores a program code configured to be executed by a device, the program code including an instruction configured to execute the method in the first aspect.

An eighth aspect provides a computer-readable medium, which stores a program code configured to be executed by a device, the program code including an instruction configured to execute the method in the second aspect.

A ninth aspect provides a system chip, which includes an input interface, an output interface, at least one processor and a memory. The processor is configured to execute a code in the memory, and when the code is executed, the processor may implement each process executed by a network device in the data transmission method in the first aspect and each implementation mode.

A tenth aspect provides a system chip, which includes an input interface, an output interface, at least one processor and a memory. The processor is configured to execute a code in the memory, and when the code is executed, the processor may implement each process executed by a terminal device in the data transmission method in the second aspect and each implementation mode.

### BRIEF DESCRIPTION OF DRAWINGS

FIG. 1 illustrates a schematic flowchart of a method for uplink data transmission according to an embodiment of the disclosure.
FIG. 2 illustrates a schematic diagram of available REs occupied by a first time-frequency resource according to an embodiment of the disclosure.
FIG. 3 illustrates a schematic diagram of available REs occupied by a first time-frequency resource according to an embodiment of the disclosure.
FIG. 4 illustrates a schematic diagram of available REs occupied by a first time-frequency resource according to an embodiment of the disclosure.
FIG. 5 illustrates a schematic flowchart of a method for uplink data transmission according to an embodiment of the disclosure.
FIG. 6 illustrates a schematic block diagram of a network device according to an embodiment of the disclosure.
FIG. 7 illustrates a schematic block diagram of a terminal device according to an embodiment of the disclosure.
FIG. 8 illustrates a schematic block diagram of a network device according to an embodiment of the disclosure.
FIG. 9 illustrates a schematic block diagram of a terminal device according to an embodiment of the disclosure.
FIG. 10 illustrates a schematic structure diagram of a system chip according to an embodiment of the disclosure.
FIG. 11 illustrates a schematic structure diagram of a system chip according to an embodiment of the disclosure.

### DETAILED DESCRIPTION

It is to be understood that the technical solutions of the embodiments of the disclosure may be applied to various communication systems, for example, a present communication system like a Global System of Mobile Communication (GSM), a Code Division Multiple Access (CDMA) system, a Wideband Code Division Multiple Access (WCDMA) system, a General Packet Radio Service (GPRS), an LTE system and a Universal Mobile Telecommunication System (UMTS), and may particularly be applied to a future 5th-Generation (5G) system.

In the embodiments of the disclosure, a network device may be a device configured to communicate with a terminal device. The network device may be a Base Transceiver Station (BTS) in the GSM or the CDMA, may also be a NodeB (NB) in the WCDMA system, may also be an Evolutional Node B (eNB or eNodeB) in the LTE system and may further be a wireless controller in a Cloud Radio Access Network (CRAN) scenario, or the network device may be a relay station, an access point, a vehicle-mounted device, a wearable device, a network device in a future 5G network, a network device in a future evolved Public Land Mobile Network (PLMN) or the like. There are no limits made in the embodiments of the disclosure.

In the embodiments of the disclosure, a terminal device may be User Equipment (UE), an access terminal, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device or another processing device connected to a wireless modem, a vehicle-mounted device, a wearable device, a terminal device in the future 5G network, a terminal device in the future evolved PLMN or the like. There are no limits made in the embodiments of the disclosure.

In an existing LTE system, a terminal device, before transmitting data to a network device, is required to receive a scheduling instruction from the network device and then may transmit the data to the network device. The network device receives the data and feeds back Acknowledgment (ACK) information or Negative Acknowledgment (NACK) information to the terminal device. The ACK information represents that the network device receives and correctly decodes the data and the NACK information represents that the network device receives but incorrectly decodes the data. In such a manner, the terminal device may determine a data receiving case of the network device through the ACK information or the NACK information fed back by the network device.

For improving uplink data transmission flexibility, an uplink data transmission without grant (i.e., grant-free transmission, or unscheduled uplink data transmission) mode is introduced. In such a transmission mode, the terminal device may autonomously transmit uplink data without waiting for scheduling of a base station. By such unscheduled uplink transmission, a control signaling overhead may be reduced, an end-to-end delay may be reduced and power consumption of a terminal may further be reduced. The transmission mode is relatively suitable for transmission of a low-frequency small-data-packet service and a service with a low delay requirement.

However, such a transmission manner has the problem that how the terminal device can determine whether the network device correctly receives the uplink data transmitted by the terminal device or not. Therefore, embodiments of the disclosure disclose a method for uplink data transmission. In the method, the network device, when correctly receiving the uplink data transmitted by the terminal device, feeds back a first sequence to the terminal device, and then the terminal device, after detecting the first sequence, determines that the network device has correctly received the uplink data transmitted by the terminal device. When the network device does not correctly receive the uplink data transmitted by the terminal device, the network device does not transmit the first sequence to the terminal device. In such a case, the terminal device detects no first sequence, and determines that the network device does not correctly receive the uplink data transmitted by the terminal device.

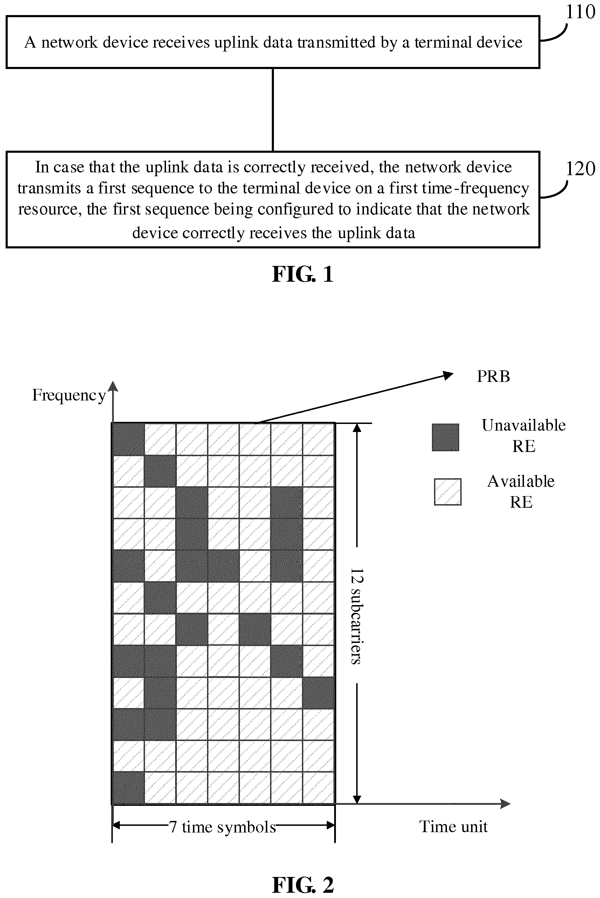

FIG. 1 illustrates a schematic flowchart of a method for uplink data transmission according to an embodiment of the disclosure. The method illustrated in FIG. 1 includes the following actions.

In 110, a network device receives uplink data transmitted by a terminal device.

It is to be understood that the uplink data in the embodiment of the disclosure may be data transmitted by the terminal device to the network device. In addition, the terminal device, when transmitting the uplink data to the network device, may directly transmit the uplink data to the network device without scheduling by the network device.

In 120, in case that the uplink data is correctly received, the network device transmits a first sequence to the terminal device on a first time-frequency resource. The first sequence is configured to indicate that the network device correctly receives the uplink data.

It is to be understood that in the case that the uplink data is correctly received, it means that the network device receives and correctly decodes the uplink data transmitted by the terminal device. When the network device does not correctly receive the uplink data, the network device does not transmit the first sequence to the terminal device. Correspondingly, for the terminal device, if the first sequence is detected (within a preset time), it is determined that the network device receives the uplink data; if the first sequence is not detected (within the preset time), it is determined that the network device does not receive the uplink data.

In addition, the first sequence may be an orthogonal sequence, a low correlation sequence, or another sequence. Preferably, the first sequence is a ZC sequence. The ZC sequence is a sequence raised by Zadoff and Chu and is a constant amplitude and zero autocorrelation sequence.

In the embodiment of the disclosure, the network device, when correctly receiving the uplink data, may transmit the first sequence to the terminal device and then the terminal device may detect the first sequence to determine whether the network device receives the uplink data or not, so that normal data transmission between the terminal device and the network device may be ensured.

Alternatively, there may be the following cases for REs occupied by the first time-frequency resource.

A first case: the first time-frequency resource occupies all available REs on at least one PRB.

A second case: the first time-frequency resource occupies all the available REs on some of time symbols of the at least one PRB.

A third case: the first time-frequency resource occupies the available REs on at least one time symbol.

For the first case, the first time-frequency resource may occupy all available REs on all of the time symbols on the at least one PRB. For the second case, the first time-frequency resource merely occupies all the available REs on some of the time symbols on the at least one PRB. For the third case, it is not required anymore that the occupied REs belong to the same PRB; instead, the available REs on some of the time symbols are directly occupied. The REs occupied by the first time-frequency resources may be flexibly allocated, i.e., more time symbols may be occupied, or merely one time symbol may be occupied but an occupied frequency range may relatively be wide. The first time-frequency resource is flexibly set, so that time-frequency resources may be reasonably utilized, and flexible data transmission between the terminal device and the network device may be ensured.

The available REs may be REs not occupied by other signals or channels in the PRB, or may be REs except REs reserved for the other signals or channels. Herein, the other signals or channels may be signals or channels with relatively high priorities, for example, Packet Switching Service (PSS) information, Subscriber Service System (SSS) information and a Physical Broadcast Channel (PBCH).

The three cases will be described below in combination with FIG. 2 to FIG. 4 in detail.

In FIG. 2, the large rectangular box represents a PRB and the PRB includes 84 REs. The REs in gray areas represent REs which have been allocated to the other signals or channels and are unavailable REs. Except these REs, all of the other REs are available REs. The first time-frequency resource occupies all the available REs in the PRB.

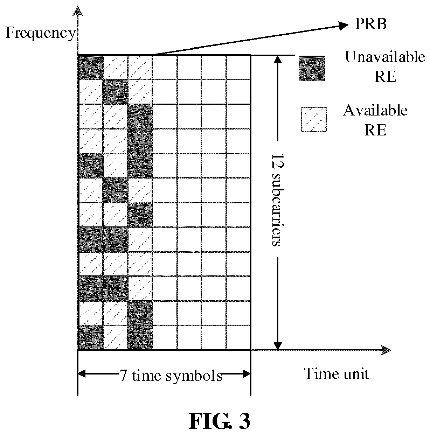

In FIG. 3, the large rectangular box represents a PRB and first three time symbols of the PRB include totally 36 REs. The number of unavailable REs is 15 and the number of available REs is 21. The first time-frequency resource occupies all the available REs of the first three time symbols.

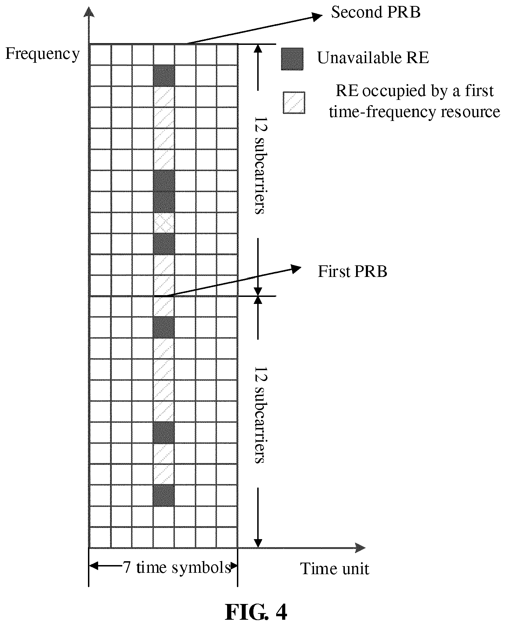

In FIG. 4, the two large rectangular boxes represent two PRBs, the upper is a first PRB, the lower is a second PRB, the first time-frequency resource occupies some of available REs on the first PRB and the second PRB, and a starting RE occupied by the first time-frequency resource is not a first RE on a fourth time unit of the first PRB.

From the above, the starting RE occupied by the first time-frequency resource may be a first RE of the PRB, or may be a certain RE in middle of the PRB.

Alternatively, as an embodiment, the method of the embodiment of the disclosure further includes that, the network device determines a time-domain location and/or a frequency-domain location occupied by the first time-frequency resource according to a dedicated parameter of the terminal device.

Herein, the dedicated parameter of the terminal device may be an ID of the terminal device.

That is, the network device, before transmitting the first sequence to the terminal device, may determine the first time-frequency resource. There are multiple manners for determining the first resource. One is configuration by the network device and the other is predetermined according to a protocol, for example, determination according to the dedicated parameter of the terminal device.

Specifically, the network device, when determining the first time-frequency resource, may merely determine the time-domain location occupied by the first time-frequency resource, or may merely determine the frequency-domain location occupied by the first time-frequency resource, or, the network device may determine both of the time-domain location and the frequency-domain location occupied by the first time-frequency resource.

For example, when the network device determines the first resource according to the protocol, there are specifically included the following three cases, i.e., the time-domain location occupied by the first time-frequency resource is determined; the frequency-domain location occupied by the first time-frequency resource is determined; and the time-domain location and frequency-domain location occupied by the first time-frequency resource are determined.

When the network device determines the time-domain location and/or the frequency-domain location occupied by the first time-frequency resource, high-layer signaling or downlink control signaling may be adopted to configure the time-domain location and/or the frequency-domain location occupied by the first time-frequency resource, and then the first sequence may be configured at the time-domain location and/or the frequency-domain location occupied by the first time-frequency resource.

Alternatively, as an embodiment, the method of the embodiment of the disclosure further includes that, the network device transmits first indication information to the terminal device, the first indication information being configured to indicate the time-domain location and/or the frequency-domain location occupied by the first time-frequency resource.

It is to be understood that, when the first time-frequency resource is determined by the network device, the network device, after determining the first time-frequency resource, may notify the terminal device of the time-domain location and/or the frequency-domain location occupied by the first time-frequency resource through the first indication information.

Specifically, when the network device determines the frequency-domain location occupied by the first time-frequency resource, the frequency-domain location occupied by the first time-frequency resource is notified through the first indication information. When the network device determines the time-domain location occupied by the first time-frequency resource, the time-domain location occupied by the first time-frequency resource is notified through the first indication information. When the network device determines the time-domain location and frequency-domain location occupied by the first time-frequency resource, the time-domain location and frequency-domain location occupied by the first time-frequency resource are notified through the first indication information.

Alternatively, the method of the embodiment of the disclosure further includes that, the network device determines a length of the first sequence, and the network device transmits second indication information to the terminal device, the second indication information being configured to indicate the length of the first sequence.

There may be multiple options for the length of the first sequence. For example, a system supports two orthogonal sequences with lengths of 16 bits and 32 bits, and the network device may select one length as the length of the first sequence and notifies the terminal device of the selected length of the first sequence, to enable the terminal device to conveniently detect the length of the first sequence.

If the length of the first sequence is a default length, the network device is not required to determine the length of the first sequence, and is also not required to transmit the second indication information to the terminal device to notify the terminal device of the length of the first sequence. In such a case, the terminal device directly detects the first sequence on the first time-frequency resource according to the default length of the first sequence.

Alternatively, as an embodiment, the method of the embodiment of the disclosure further includes that, the network device generates the first sequence according to the dedicated parameter of the terminal device.

The dedicated parameter may be the ID of the terminal device. When the first sequence is generated, the network device may generate different sequences according to different device IDs and transmit the sequences to corresponding terminal devices.

Alternatively, as an embodiment, the network device receives the uplink data on a second time-frequency resource, the second time-frequency resource occupies a time unit N and the first time-frequency resource occupies a time unit N+K, both of N and K being nonnegative integers.

A certain relationship is formed between time units of a physical resource through which the network device transmits the first sequence and a physical resource through which the terminal device transmits the uplink data. This relationship may be predetermined by the terminal device and the network device or predetermined in the protocol. Therefore, the terminal device, after transmitting the uplink data, may determine the specific time unit(s) on which the first sequence is detected. In addition, a value of K may be predetermined by the communication protocol or directly configured by the network device.

Alternatively, as an embodiment, in case that the uplink data is not correctly received, the network device transmits a second sequence to the terminal device on the first time-frequency resource, the second sequence being configured to indicate that the network device does not correctly receive the uplink data.

It is to be understood that in the case that the uplink data is not correctly received, it means that the network device receives but fails to decode the uplink data transmitted by the terminal device. The second sequence may be an orthogonal sequence, a low correlation sequence or another sequence and may preferably be a ZC sequence. In addition, the second sequence may be a sequence different from the first sequence. Moreover, the network device may generate the second sequence according to the dedicated parameter of the terminal device, and the network device may also determine a length of the second sequence and notify the terminal device of the length of the second sequence through indication information, to enable the terminal device to detect the second sequence according to the length of the second sequence.

It is to be understood that, in the embodiment of the disclosure, the terminal device may merely detect the first sequence to determine whether the network device correctly receives the uplink data transmitted by the terminal device or not, if the first sequence is detected, the terminal device determines that the network device correctly receives the uplink data; if the first sequence is not detected, the terminal device determines that the network device does not correctly receive the uplink data.

In addition, the network device may transmit the first sequence or the second sequence to the terminal device to indicate that the network device correctly receives the uplink data or does not correctly receive the uplink data respectively. The terminal device, if detecting the first sequence, determines that the network device correctly receives the uplink data transmitted by the terminal device. The terminal device, if detecting the second sequence, determines that the network device does not correctly receive the uplink data transmitted by the terminal device.

Alternatively, the method of the embodiment of the disclosure may be applied to uplink data transmission without grant.

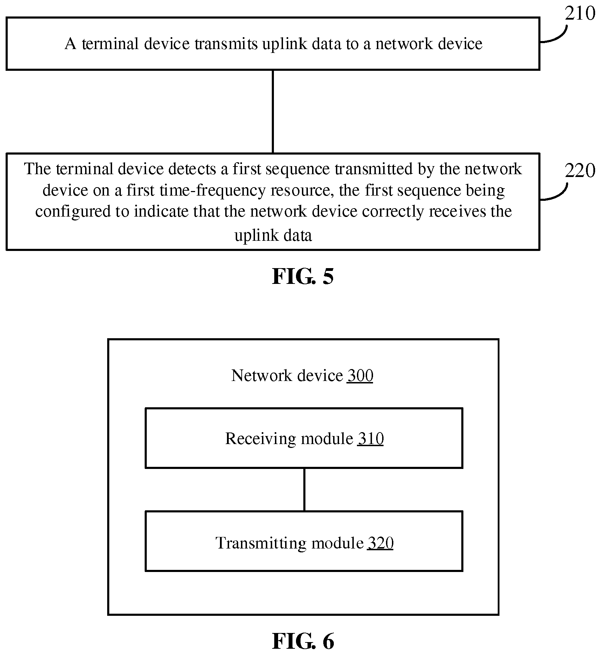

The method for uplink data transmission of the embodiments of the disclosure is described above in combination with FIG. 1 from the view of the network device in detail. The method for uplink data transmission of the embodiments of the disclosure will be described below in combination with FIG. 5 from the view of the terminal device in detail. It is to be understood that actions executed by the terminal device correspond to the actions executed by the network device. For simplicity, repeated descriptions will be properly omitted hereinafter.

FIG. 5 illustrates a schematic flowchart of a method for uplink data transmission according to an embodiment of the disclosure. The method illustrated in FIG. 5 includes the following actions.

In 210, a terminal device transmits uplink data to a network device.

In 220, the terminal device detects a first sequence transmitted by the network device on a first time-frequency resource, the first sequence being configured to indicate that the network device correctly receives the uplink data.

The first sequence may be an orthogonal sequence, a low correlation sequence or the like. Preferably, the first sequence may be a ZC sequence.

It is to be understood that in the case that the network device correctly receives the uplink data, it means that the network device receives and correctly decodes the uplink data; and in the case that the network device does not correctly receive the uplink data, it means that the network device receives but incorrectly decodes the uplink data.

In the embodiment of the disclosure, the network device, in case that the uplink data is correctly received, may transmit the first sequence to the terminal device, and then the terminal device may detect the first sequence to determine whether the network device receives the uplink data or not, so that normal data transmission between the terminal device and the network device may be ensured.

Alternatively, the first time-frequency resource occupies available REs on all time units of at least one PRB, or may occupy the available REs on some of the time units of the at least one PRB, or may occupy the available REs on at least one time symbol.

The available REs may be REs not occupied by other signals or channels in the PRB, or may be other REs except REs reserved for the other signals or channels.

Herein, the other signals or channels may be signals or channels with relatively high priorities, for example, PSS information, SSS information and a PBCH.

Alternatively, as an embodiment, the terminal device transmits the uplink data to the network device on a second time-frequency resource, the second time-frequency resource occupies a time unit N and the first time-frequency resource occupies a time unit N+K, both of N and K being nonnegative integers.

It is to be understood that a certain relationship is formed between the time units occupied by the first time-frequency resource and the second time-frequency resource. This relationship may be predetermined by the terminal device and the network device or predetermined in a protocol. Therefore, the terminal device, after transmitting the uplink data, may determine the specific time unit on which the first sequence is detected. In addition, a value of K may be predetermined by the communication protocol or directly configured by the network device.

Alternatively, as an embodiment, in case that the uplink data is not correctly received, the network device transmits a second sequence to the terminal device on the first time-frequency resource, the second sequence being configured to indicate that the network device does not correctly receive the uplink data.

Alternatively, the method of the embodiment of the disclosure may be applied to uplink data transmission without grant. Uplink data transmission without grant means that the terminal device with data to be transmitted may automatically transmit the uplink data without scheduling by a base station. Such a transmission manner is favorable for reducing a control signaling overhead in a system, reducing an end-to-end delay and reducing power consumption of a terminal and is particularly applied to a low-frequency small-data-packet service, a service with a low delay requirement and the like.

The data transmission methods of the embodiments of the disclosure is described above in combination with FIG. 1 to FIG. 5. The network device and the terminal device of the embodiments of the disclosure will be described below in combination with FIG. 6 to FIG. 9 in detail. It is to be understood that the network device and the terminal device in FIG. 6 to FIG. 9 may execute each action as described above by a transmitter and a receiver. For avoiding repetitions, no more elaborations will be made herein.

FIG. 6 illustrates a schematic block diagram of a network device according to an embodiment of the disclosure. The network device 300 illustrated in FIG. 6 includes a receiving module 310 and a transmitting module 320.

The receiving module 310 is configured to receive uplink data transmitted by a terminal device.

The transmitting module 320 is configured to, in case that the receiving module correctly receives the uplink data, transmit a first sequence to the terminal device, the first sequence being configured to indicate that the network device correctly receives the uplink data.

In the embodiment of the disclosure, the network device, in case that the uplink data is correctly received, may transmit the first sequence to the terminal device, and then the terminal device may detect the first sequence to determine whether the network device receives the uplink data or not, so that normal data transmission between the terminal device and the network device may be ensured.

Alternatively, as an embodiment, the network device 300 further includes a first determination module 330, configured to determine a time-domain location and/or a frequency-domain location occupied by the first time-frequency resource according to a dedicated parameter of the terminal device.

Alternatively, as an embodiment, the transmitting module 320 is further configured to transmit first indication information to the terminal device, the first indication information being configured to indicate the time-domain location and/or the frequency-domain location occupied by the first time-frequency resource.

Alternatively, as an embodiment, the network device further includes a second determination module 340, configured to determine a length of the first sequence. The transmitting module 320 is configured to transmit second indication information to the terminal device, the second indication information being configured to indicate the length of the first sequence.

Alternatively, as an embodiment, the network device further includes a generation module 350, configured to generate the first sequence according to the dedicated parameter of the terminal device.

Alternatively, as an embodiment, the receiving module 310 is specifically configured to receive the uplink data on a second time-frequency resource, the second time-frequency resource occupies a time unit N and the first time-frequency resource occupies a time unit N+K, both of N and K being nonnegative integers.

Alternatively, as an embodiment, the receiving module 310 receives the uplink data on the second time-frequency resource, the second time-frequency resource occupies the time unit N and the first time-frequency resource occupies the time unit N+K, both of N and K being nonnegative integers.

Alternatively, as an embodiment, the first time-frequency resource includes all available REs on at least one PRB.

Alternatively, as an embodiment, the first time-frequency resource includes all available REs on some of time symbols of the at least one PRB.

Alternatively, as an embodiment, the first time-frequency resource includes all available REs on at least one time symbol.

Alternatively, as an embodiment, the first sequence is an orthogonal sequence or a ZC sequence.

Alternatively, as an embodiment, the transmitting module is further configured to, in case that the uplink data is not correctly received, transmit a second sequence to the terminal device on the first time-frequency resource, the second sequence being configured to indicate that the network device does not correctly receive the uplink data.

Alternatively, as an embodiment, the network device is applied to uplink data transmission without grant.

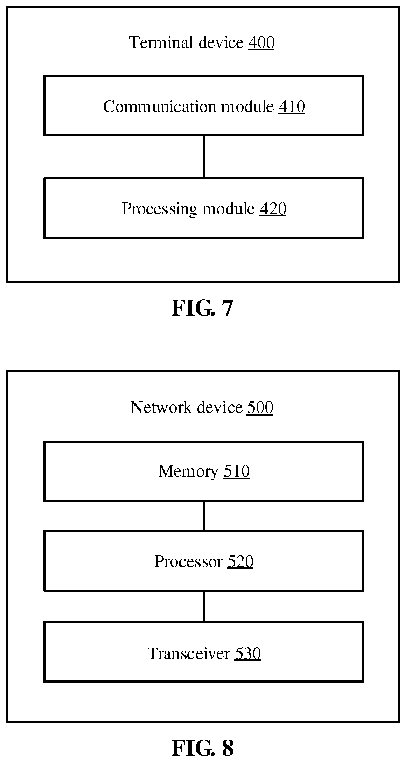

FIG. 7 illustrates a schematic block diagram of a terminal device according to an embodiment of the disclosure. The terminal device 400 illustrated in FIG. 7 includes a communication module 410 and a processing module 420.

The communication module 410 is configured to transmit uplink data to a network device.

The processing module 420 is configured to detect a first sequence transmitted by the network device on a first time-frequency resource, the first sequence being configured to indicate that the network device correctly receives the uplink data.

In the embodiment of the disclosure, the network device, in case that the uplink data is correctly received, may transmit the first sequence to the terminal device, and then the terminal device may detect the first sequence to determine whether the network device receives the uplink data or not, so that normal data transmission between the terminal device and the network device may be ensured.

Alternatively, as an embodiment, the processing module 420 is further configured to determine a time-domain location and/or a frequency-domain location occupied by the first time-frequency resource according to a dedicated parameter of the terminal device.

Alternatively, as an embodiment, the communication module 410 is further configured to receive first indication information transmitted by the network device, the first indication information being configured to indicate the time-domain location and/or the frequency-domain location occupied by the first time-frequency resource. The processing module 420 is configured to determine the first time-frequency resource according to the first indication information.

Alternatively, as an embodiment, the communication module 410 is further configured to receive second indication information transmitted by the network device, the second indication information being configured to indicate a length of the first sequence. The processing module 420 is further configured to determine the length of the first sequence according to the second indication information.

Alternatively, as an embodiment, the processing module 420 is further configured to determine the first sequence according to the dedicated parameter of the terminal device.

Alternatively, as an embodiment, the communication module 410 is configured to transmit the uplink data on a second time-frequency resource, the second time-frequency resource occupies a time unit N, and the first time-frequency resource occupies a time unit N+K, both of N and K being nonnegative integers.

Alternatively, as an embodiment, the first time-frequency resource includes all available REs on at least one PRB.

Alternatively, as an embodiment, the first time-frequency resource includes all available REs on some of time symbols of the at least one PRB.

Alternatively, as an embodiment, the first time-frequency resource includes available REs on at least one time symbol.

Alternatively, as an embodiment, the first sequence is an orthogonal sequence or a ZC sequence.

Alternatively, as an embodiment, the communication module 410 is further configured to detect a second sequence transmitted by the network device on the first time-frequency resource, the second sequence being configured to indicate that the network device does not correctly receive the uplink data.

Alternatively, as an embodiment, the terminal device is applied to uplink data transmission without grant.

FIG. 8 illustrates a schematic block diagram of a network device according to an embodiment of the disclosure. The network device 500 illustrated in FIG. 8 includes: a memory 510, configured to store a program; a processor 520; and a transceiver 530.

Herein, the processor 520 is configured to execute the program stored in the memory 510. When the program is executed, the processor 520 is configured to schedule the transceiver 530 to receive uplink data transmitted by a terminal device. The processor 520 is further configured to schedule the transceiver 530 and, in case that the transceiver 530 correctly receives the uplink data, transmit a first sequence to the terminal device, the first sequence being configured to indicate that the network device correctly receives the uplink data.

In the embodiment of the disclosure, the network device, in case that the uplink data is correctly received, may transmit the first sequence to the terminal device, and then the terminal device may detect the first sequence to determine whether the network device receives the uplink data or not, so that normal data transmission between the terminal device and the network device may be ensured.

Alternatively, as an embodiment, the processor 520 is further configured to determine a time-domain location and/or a frequency-domain location occupied by the first time-frequency resource according to a dedicated parameter of the terminal device.

Alternatively, as an embodiment, the transceiver 530 is further configured to transmit first indication information to the terminal device, the first indication information being configured to indicate the time-domain location and/or the frequency-domain location occupied by the first time-frequency resource.

Alternatively, as an embodiment, the processor 520 is further configured to determine a length of the first sequence. The transceiver 530 is configured to transmit second indication information to the terminal device, the second indication information being configured to indicate the length of the first sequence.

Alternatively, as an embodiment, the processor 520 is further configured to generate the first sequence according to the dedicated parameter of the terminal device.

Alternatively, as an embodiment, the transceiver 530 is further configured to receive the uplink data on a second time-frequency resource, the second time-frequency resource occupies a time unit N and the first time-frequency resource occupies a time unit N+K, both of N and K being nonnegative integers.

Alternatively, as an embodiment, the first time-frequency resource includes all available REs on at least one PRB.

Alternatively, as an embodiment, the first time-frequency resource includes all available REs on some of time symbols of the at least one PRB.

Alternatively, as an embodiment, the first time-frequency resource includes available REs on at least one time symbol.

Alternatively, as an embodiment, the first sequence is an orthogonal sequence or a ZC sequence.

Alternatively, as an embodiment, the transceiver 530 is further configured to, in case that the uplink data is not correctly received, transmit a second sequence to the terminal device on the first time-frequency resource, the second sequence being configured to indicate that the network device does not correctly receive the uplink data.

Alternatively, as an embodiment, the network device is applied to uplink data transmission without grant.

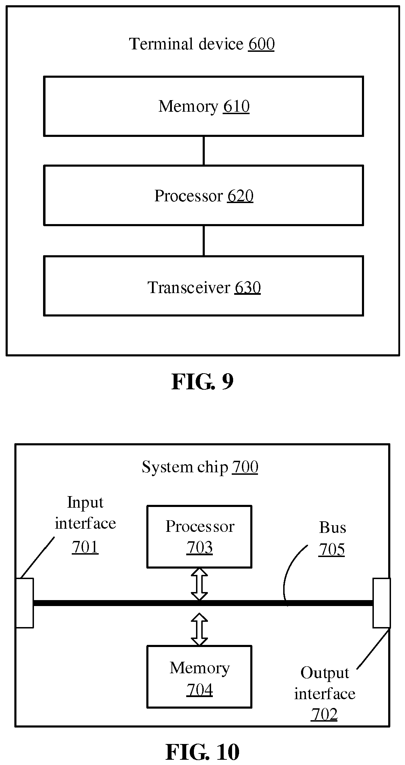

FIG. 9 illustrates a schematic block diagram of a terminal device according to an embodiment of the disclosure. The terminal device 600 illustrated in FIG. 9 includes: a memory 610 is configured to store a program; a processor 620; and a transceiver 630.

Herein, the processor 620 is configured to execute the program stored in the memory 610. When the program is executed, the processor 620 is configured to schedule the transceiver 630 to transmit uplink data to a network device. The processor 620 is further configured to detect a first sequence transmitted by the network device on a first time-frequency resource, the first sequence being configured to indicate that the network device correctly receives the uplink data.

In the embodiment of the disclosure, the network device, in case that the uplink data is correctly received, may transmit the first sequence to the terminal device, and then the terminal device may detect the first sequence to determine whether the network device receives the uplink data or not, so that normal data transmission between the terminal device and the network device may be ensured.

Alternatively, as an embodiment, the processor 620 is further configured to determine a time-domain location and/or a frequency-domain location occupied by the first time-frequency resource according to a dedicated parameter of the terminal device.

Alternatively, as an embodiment, the transceiver 630 is further configured to receive first indication information transmitted by the network device, the first indication information being configured to indicate the time-domain location and/or the frequency-domain location occupied by the first time-frequency resource. A processing module 420 is configured to determine the first time-frequency resource according to the first indication information.

Alternatively, as an embodiment, the transceiver 630 is further configured to receive second indication information transmitted by the network device, the second indication information being configured to indicate a length of the first sequence. The processor 620 is further configured to determine the length of the first sequence according to the second indication information.

Alternatively, as an embodiment, the processor 620 is further configured to determine the first sequence according to the dedicated parameter of the terminal device.

Alternatively, as an embodiment, the processor 620 is further configured to transmit the uplink data on a second time-frequency resource, the second time-frequency resource occupies a time unit N and the first time-frequency resource occupies a time unit N+K, both of N and K being nonnegative integers.

Alternatively, as an embodiment, the first time-frequency resource includes all available REs on at least one PRB.

Alternatively, as an embodiment, the first time-frequency resource includes all available REs on some of time symbols of the at least one PRB.

Alternatively, as an embodiment, the first time-frequency resource includes available REs on at least one time symbol.

Alternatively, as an embodiment, the first sequence is an orthogonal sequence or a ZC sequence.

Alternatively, as an embodiment, the processor 620 is further configured to detect a second sequence transmitted by the network device on the first time-frequency resource, the second sequence being configured to indicate that the network device does not correctly receive the uplink data.

Alternatively, as an embodiment, the terminal device is applied to uplink data transmission without grant.

FIG. 10 illustrates a schematic structure diagram of a system chip according to an embodiment of the disclosure. The system chip 700 of FIG. 10 includes an input interface 701, an output interface 702, at least one processor 703 and a memory 704. The input interface 701, the output interface 702, the processor 703 and the memory 704 are connected through a bus 705. The processor 703 is configured to execute codes in the memory 704. When the codes are executed, the processor 703 implements the method executed by a network device in FIG. 1.

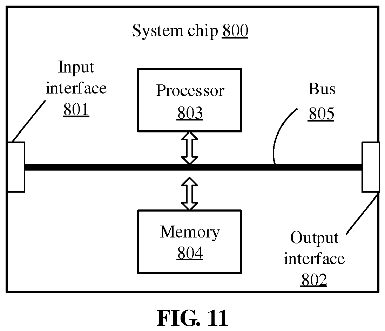

FIG. 11 illustrates a schematic structure diagram of a system chip according to an embodiment of the disclosure. The system chip 800 of FIG. 11 includes an input interface 801, an output interface 802, at least one processor 803 and a memory 804. The input interface 701, the output interface 702, the processor 803 and the memory 804 are connected through a bus 805. The processor 803 is configured to execute codes in the memory 704. When the codes are executed, the processor 703 implements the method executed by a terminal device in FIG. 5.

Those of ordinary skill in the art may realize that the units and algorithm actions of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

Those skilled in the art may clearly learn about that specific working processes of the system, device and unit described above may be seen from the corresponding processes in the method embodiment and will not be elaborated herein for convenient and brief description.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the actions of the method in each embodiment of the disclosure. The abovementioned storage medium includes: various media capable of storing program codes such as a U disk, a mobile hard disk, a Read-Only Memory (ROM), a Random Access Memory (RAM), a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for uplink data transmission, comprising:
receiving, by a network device, uplink data transmitted by a terminal device; and
in case that the uplink data is correctly received, transmitting, by the network device, a first sequence to the terminal device on a first time-frequency resource, the first sequence being configured to indicate that the network device correctly receives the uplink data.

2. The method of claim 1, further comprising:
determining, by the network device, at least one of a time-domain location or a frequency-domain location occupied by the first time-frequency resource according to a dedicated parameter of the terminal device.

3. The method of claim 1, further comprising:
transmitting, by the network device, first indication information to the terminal device, the first indication information being configured to indicate at least one of a time-domain location or a frequency-domain location occupied by the first time-frequency resource.

4. The method of any one of claims 1-3, further comprising:
determining, by the network device, a length of the first sequence; and
transmitting, by the network device, second indication information to the terminal device, the second indication information being configured to indicate the length of the first sequence.

5. The method of any one of claims 1-4, further comprising:
generating, by the network device, the first sequence according to the dedicated parameter of the terminal device.

6. The method of any one of claims 1-5, wherein the network device receives the uplink data on a second time-frequency resource, the second time-frequency resource occupies a time unit N and the first time-frequency resource occupies a time unit N+K, both of N and K being nonnegative integers.

7. The method of any one of claims 1-6, wherein the first time-frequency resource comprises all available Resource Elements, REs, on at least one Physical Resource Block, PRB.

8. The method of any one of claims 1-6, wherein the first time-frequency resource comprises all available REs on some of time symbols of the at least one PRB.

9. The method of any one of claims 1-6, wherein the first time-frequency resource comprises available REs on at least one time symbol.

10. The method of any one of claims 1-9, wherein the first sequence is an orthogonal sequence or a Zadoff Chu, ZC, sequence.

11. The method of any one of claims 1-10, further comprising:
in case that the uplink data is not correctly received, transmitting, by the network device, a second sequence to the terminal device on the first time-frequency resource, the second sequence being configured to indicate that the network device does not correctly receive the uplink data.

12. The method of any one of claims 1-11, wherein the method is applied to uplink data transmission without grant.

13. A method for uplink data transmission, comprising:
transmitting, by a terminal device, uplink data to a network device; and
detecting, by the terminal device, a first sequence transmitted by the network device on a first time-frequency resource, the first sequence being configured to indicate that the network device correctly receives the uplink data.

14. The method of claim 13, further comprising:
determining, by the terminal device, at least one of a time-domain location or a frequency-domain location occupied by the first time-frequency resource according to a dedicated parameter of the terminal device.

15. The method of claim 13, further comprising:
receiving, by the terminal device, first indication information transmitted by the network device, the first indication information being configured to indicate at least one of a time-domain location or a frequency-domain location occupied by the first time-frequency resource; and
determining, by the terminal device, the first time-frequency resource according to the first indication information.

16. The method of any one of claims 13-15, further comprising:
receiving, by the terminal device, second indication information transmitted by the network device, the second indication information being configured to indicate a length of the first sequence; and
determining, by the terminal device, the length of the first sequence according to the second indication information.

17. The method of any one of claims 13-16, further comprising:
determining, by the terminal device, the first sequence according to the dedicated parameter of the terminal device.

18. The method of any one of claims 13-17, wherein the terminal device transmits the uplink data on a second time-frequency resource, the second time-frequency resource occupies a time unit N and the first time-frequency resource occupies a time unit N+K, both of N and K being nonnegative integers.

19. The method of any one of claims 13-18, wherein the first time-frequency resource comprises all available Resource Elements, REs, on at least one Physical Resource Block, PRB.

20. The method of any one of claims 13-18, wherein the first time-frequency resource comprises all available REs on some of time symbols of the at least one PRB.

21. The method of any one of claims 13-18, wherein the first time-frequency resource comprises available REs on at least one time symbol.

22. The method of any one of claims 13-21, wherein the first sequence is an orthogonal sequence or a Zadoff Chu, ZC, sequence.

23. The method of any one of claims 13-22, further comprising:
detecting, by the terminal device, on the first time-frequency resource, a second sequence transmitted by the network device, the second sequence being configured to indicate that the network device does not correctly receive the uplink data.

24. The method of any one of claims 13-23, wherein the method is applied to uplink data transmission without grant.

25. A network device, comprising:
a receiving module, configured to receive uplink data transmitted by a terminal device; and
a transmitting module, configured to, in case that the receiving module correctly receives the uplink data, transmit a first sequence to the terminal device, the first sequence being configured to indicate that the network device correctly receives the uplink data.

26. The network device of claim 25, further comprising:
a first determination module, configured to determine at least one of a time-domain location or a frequency-domain location occupied by the first time-frequency resource according to a dedicated parameter of the terminal device.

27. The network device of claim 25, wherein the transmitting module is further configured to transmit first indication information to the terminal device, the first indication information being configured to indicate at least one of the time-domain location or the frequency-domain location occupied by the first time-frequency resource.

28. The network device of any one of claims 25-27, further comprising:
a second determination module, configured to determine a length of the first sequence, wherein
the transmitting module is configured to transmit second indication information to the terminal device, the second indication information being configured to indicate the length of the first sequence.

29. The network device of any one of claims 25-28, further comprising:
a generation module, configured to generate the first sequence according to a dedicated parameter of the terminal device.

30. The network device of any one of claims 25-29, wherein the receiving module is configured to receive the uplink data on a second time-frequency resource, the second time-frequency resource occupies a time unit N and the first time-frequency resource occupies a time unit N+K, both of N and K being nonnegative integers.

31. The network device of any one of claims 25-30, wherein the first time-frequency resource comprises all available Resource Elements, REs, on at least one Physical Resource Block, PRB.

32. The network device of any one of claims 25-30, wherein the first time-frequency resource comprises all available REs on some of time symbols of the at least one PRB.

33. The network device of any one of claims 25-30, wherein the first time-frequency resource comprises available REs on at least one time symbol.

34. The network device of any one of claims 25-33, wherein the first sequence is an orthogonal sequence or a Zadoff Chu, ZC, sequence.

35. The network device of any one of claims 25-34, wherein the transmitting module is further configured to, in case that the uplink data is not correctly received, transmit a second sequence to the terminal device on the first time-frequency resource, the second sequence being configured to indicate that the network device does not correctly receive the uplink data.

36. The network device of any one of claims 25-35, wherein the network device is applied to uplink data transmission without grant.

37. A terminal device, comprising:
a communication module, configured to transmit uplink data to a network device; and
a processing module, configured to detect a first sequence transmitted by the network device on a first time-frequency resource, the first sequence being configured to indicate that the network device correctly receives the uplink data.

38. The terminal device of claim 37, wherein the processing module is further configured to determine at least one of a time-domain location or a frequency-domain location occupied by the first time-frequency resource according to a dedicated parameter of the terminal device.

39. The terminal device of claim 37, wherein the communication module is further configured to receive first indication information transmitted by the network device, the first indication information being configured to indicate at least one of the time-domain location or the frequency-domain location occupied by the first time-frequency resource; and
the processing module is configured to determine the first time-frequency resource according to the first indication information.

40. The terminal device of any one of claims 37-39, wherein the communication module is further configured to receive second indication information transmitted by the network device, the second indication information being configured to indicate a length of the first sequence; and
the processing module is further configured to determine the length of the first sequence according to the second indication information.

41. The terminal device of any one of claims 37-40, wherein the processing module is further configured to determine the first sequence according to a dedicated parameter of the terminal device.

42. The terminal device of any one of claims 37-41, wherein the communication module is configured to transmit the uplink data on a second time-frequency resource, the second time-frequency resource occupies a time unit N and the first time-frequency resource occupies a time unit N+K, both of N and K being nonnegative integers.

43. The terminal device of any one of claims 37-42, wherein the first time-frequency resource comprises all available Resource Elements, REs, on at least one Physical Resource Block, PRB.

44. The terminal device of any one of claims 37-42, wherein the first time-frequency resource comprises all available REs on some of time symbols of the at least one PRB.

45. The terminal device of any one of claims 37-42, wherein the first time-frequency resource comprises available REs on at least one time symbol.

46. The terminal device of any one of claims 37-45, wherein the first sequence is an orthogonal sequence or a Zadoff Chu, ZC, sequence.

47. The terminal device of any one of claims 37-46, wherein the transmitting module is further configured to detect, on the first time-frequency resource, a second sequence transmitted by the network device, the second sequence being configured to indicate that the network device does not correctly receive the uplink data.

48. The terminal device of any one of claims 37-47, wherein the terminal device is applied to uplink data transmission without grant.
